# EUROPÄISCHE PATENTSCHRIFT

(11) **EP 0 597 370 B1**
(45) Veröffentlichungstag und Bekanntmachung des Hinweises auf die Patenterteilung: **18.12.1996**
(21) Anmeldenummer: 93117774.5
(22) Anmeldetag: 03.11.1993
(51) Int. Cl.: H02P 7/00, B02C 18/24

(54) **Materialzerkleinerungs- oder Pressanlage mit einem Elektromotor.**
Machine for comminuting materials or for pressing with electric motor.
Machines à broyer des matériaux ou à presser avec moteur électrique.

(30) Priorität: 10.11.1992 DE 4237861
(43) Veröffentlichungstag der Anmeldung: 18.05.1994
(73) Patentinhaber: SCHLEICHER & Co. INTERNATIONAL AKTIENGESELLSCHAFT, D-88677 Markdorf/Bodensee (DE)
(72) Erfinder: Erlecke, Jens, D-88364 Wolfegg (DE); Blezinger,Georg, D-88662 Überlingen (DE)
(74) Vertreter: Patentanwälte Ruff, Beier, Schöndorf und Mütschele

(56) Entgegenhaltungen:
- CH-A- 387 757
- CH-A- 507 614
- DE-A- 3 612 788
- GB-A- 2 253 577

## Beschreibung

Die Erfindung betrifft eine Materialzerkleinerungs- oder -preßanlage mit einem Einphasen-Asynchron-Elektromotor als Antriebsmotor mit einer Schaltung, die Haupt-Schaltmittel zum Einschalten des Motors und Hilfs-Schaltmittel für Funktionen wie Anlaufsteuerung, Drehrichtungsumkehr o.dgl., enthält.

Bei Materialzerkleinerungs- oder -preßanlagen, beispielsweise Aktenvernichtern, Ballenpressen, etc., werden die Elektromotore besonders hohen Belastungen ausgesetzt. Sie werden nämlich häufig durch Überlastung blockiert und in diesem Zustand auf Rückwärtslauf umgeschaltet. Dabei entstehen hohe Ströme, die die Schaltmittel, also Relais, Schütze o.dgl. sehr beanspruchen.

Beispielsweise benötigt man zur Drehrichtungssteuerung eines Asynchron-Einphasen-Wechselstrommotors mit Haupt- und Hilfswicklung zwei Schütze oder Relais mit je vier Kontakten. Da der Strom und die Phasenverschiebung (Cosinus Phi) der beiden Wicklungen sehr unterschiedlich ist, müssen die Schaltgeräte nach den ungünstigsten Bedingungen ausgelegt werden. So müßten die Schaltgeräte für einen 1,1 kW Motor bei einer Betriebsspannung von 115 V, 60 Hz, 65 A bei einem Cosinus Phi von 0,7 schalten können. Auch bei einem Motor mit einer Betriebsspannung von 230 V, 50 Hz wären das noch 30 A. Schaltmittel, die dies auf Dauer aushalten, sind sehr aufwendig und teuer.

Der genannte 1,1 kW, 115 V, 60 Hz Motor erreicht bei Blockage in der Hauptwicklung 65 A bei einem Cosinus Phi von 0,7 und in der Hilfswicklung 5 A bei einem Cosinus Phi von 0,2. Die Umsteuerung kann ausschließlich über die Hilfswicklung erfolgen.

Die CH-A-507 614 zeigt eine Umkehrschaltanordnung für dreiphasige Elektromotoren, bei der vor einer Betätigung der elektromechanischen Umschaltrelais drei in die drei Phasenleitungen eingeschaltete Halbleiterventile über Steuerrelais abgeschaltet werden. Die Umkehrschaltung erfolgt also stromlos.

Aufgabe der Erfindung ist es, eine Materialzerkleinerungs- oder -preßanlage vorzuschlagen, bei der ohne Effektivitätseinbuße der Bauaufwand bei den Schaltmitteln verringert und die Betriebsstandzeit der Schaltgeräte erhöht werden kann.

Diese Aufgabe wird gemäß der Erfindung durch den Anspruch 1 gelöst.

Dadurch braucht nur noch das Hauptschaltmittel, also das Einschaltrelais oder -schütz den vollen Strom zu schalten, während die Umschaltung der Hilfswicklung bzw., bei einem Drehstrommotor, die Polumschaltung stromlos erfolgt. Die Schaltmittel brauchen nur zur Stromführung und nicht mehr zum Schalten ausgelegt zu sein. Es entsteht also beim Schalten insbesondere kein Lichtbogen, der einen Kontaktabbrand oder sonstigen Verschleiß verursacht.

Die Hilfsschaltmittel sind gegenüber den Hauptschaltmitteln zeitverzögert, nämlich von ein Zeitverzögerungsglied enthaltenden elektronischen Steuermitteln betätigbar. Falls die Steuerleistung für die Relais oder Schütze zu hoch sein sollte, um von den elektronischen Steuermitteln direkt aufgebracht zu werden, können Zwischenrelais eingeschaltet sein. Zur Hilfswicklungs-Steuerung des Einphasen-Asynchron-Motors ist im Hilfswicklungszweig eine Kapazität, also ein Betriebskondensator, vorgesehen. Dabei ist die Verzögerungszeit derart bemessen sein, daß sie ausreicht, um die Kapazität über die Hilfswicklung im wesentlichen zu entladen, bevor das Hilfsschaltmittel betätigt wird. Die Entladezeit kann auch zusätzlich über einen Entladewiderstand verkürzt werden.

Durch die Erfindung ist es möglich, die für die Einschaltung der Hilfswicklung oder Umsteuerung des Motors erforderlichen Schaltmittel, wie Relais als einfache, wenig aufwendige Schaltrelais zu bemessen, die lediglich die durch sie geführte Stromstärke galvanisch aushalten müssen. Aufwendige und dem Kontaktabbrand und Verschleiß ausgesetzte Leistungsrelais oder -schütze können auf ein Hauptschaltmittel beschränkt werden. Dies erhöht insbesondere bei so häufiger Blockierung und Umschaltung im blockierten Zustand ausgesetzten Motoren und Schaltungen für Dokumentenvernichter oder Ballenpressen die Standzeit bei gleichzeitiger Senkung des Bauaufwandes.

Der Mehraufwand für ein Zeitverzögerungsglied in der ohnehin meist elektronischen Steuerung ist demgegenüber minimal.

Ausführungsbeispiele der Erfindung sind in den Zeichnungen dargestellt und werden im folgenden näher erläutert. In den Zeichnungen zeigen:

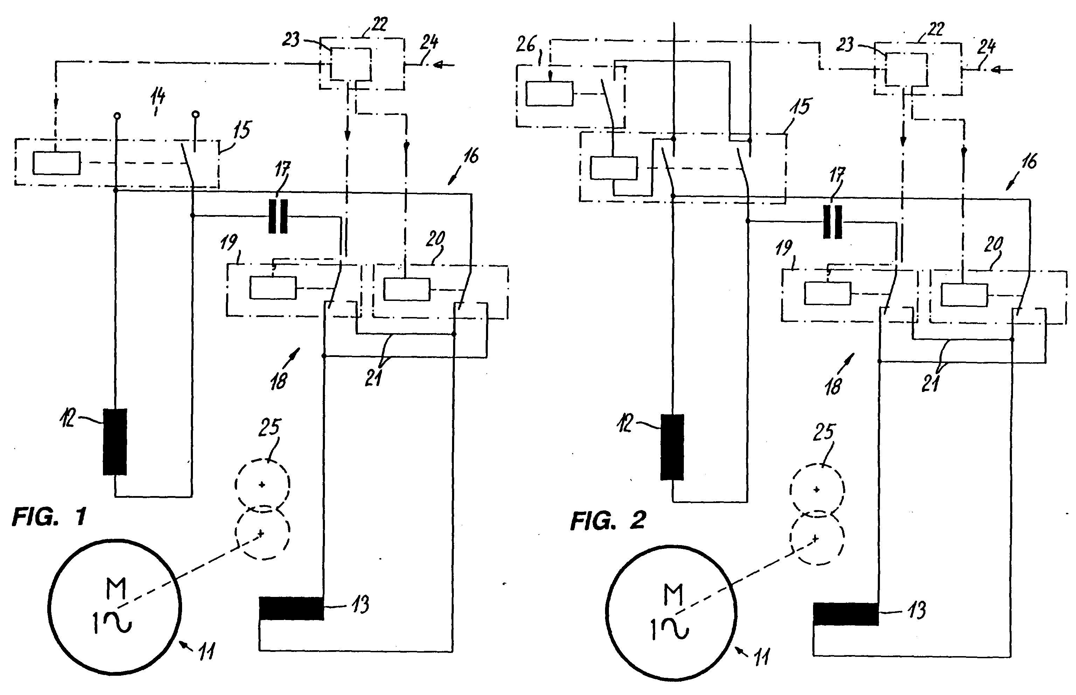

- Fig. 1 bis 3: Schaltungen eines Asynchron- Einphasen-Wechselstrommotors.

Fig. 1 zeigt einen Asynchron-Einphasen-Wechselstrommotor 11, dessen Läufer von einer Hauptwicklung 12 im Zusammenwirken mit einer Hilfswicklung wahlweise in beiden Drehrichtungen angetrieben werden kann. Er wird von einem Netzanschluß 14 versorgt, und zwar über ein Hauptschaltmittel 15, das in Form eines einpoligen Leistungsrelais in einer der Netz zuleitungen liegt.

Hinter dem Relais zweigt ein Hilfswicklungszweig 16 ab, in den die Hilfswicklung 13, eine Kapazität in Form eines Kondensators 17 und eine Umschalteinrichtung 18 enthalten sind. Die Umschalteinrichtung enthält im vorliegenden Beispiel zwei Hilfsschaltmittel 19, 20 in Form von Relais. Während das Hauptschaltmittel 15 ein Relais zum Ein- und Ausschalten hoher Ströme ist, brauchen die Relais 19, 20 nur zum stromlosen Schalten der entsprechenden, über die Hilfswicklung laufenden Ströme ausgebildet sein. Die Hilfsschaltmittel sind zum Umpolen der Hilfswicklung mit je zwei Kontakten und entsprechenden Umpolungsleitungen 21 verbunden.

Strichpunktiert sind die Steueranschlüsse dargestellt, die die Schaltmittel 15, 19, 20 betätigen, und zwar von elektronischen Steuermitteln 22 aus, die ein Zeitverzögerungsglied 23 enthalten. Der die Steuerung auslösende Impuls wird über eine Signalleitung 24 den Steuermitteln zugeführt.

Der Motor 11 treibt über ein nicht dargestelltes Getriebe ein strichpunktiert angedeutetes Schneidwerk 25 eines Aktenvernichters oder ähnlichen Zerkleinerungsgerätes an.

Das Steuerungsverfahren ist wie folgt:

Wenn das Gerät eingeschaltet wird, also das Schneidwerk zum Betrieb vorwärts laufen soll, wird über die Signalleitung 24 ein entsprechender Impuls an die Steuermittel 22 gegeben, die zuerst das Relais 19 anziehen lassen. Mit einer über das Zeitverzögerungsglied 23 vorgegebenen Zeitverzögerung zieht danach das Leistungsrelais 15 an. Das Relais 19 hat also stromlos geschaltet, während das Leistungsrelais 15 den Einschaltstrom schaltet. Der Motor läuft im Vorlauf an und treibt das Schneidwerk 25. Wenn die Notwendigkeit zu einer Umsteuerung eintritt, was meist mannuell oder automatisch nach einer Blockierung des Schneidwerkes erfolgt, beispielsweise nach der Eingabe einer zu dicken Blattlage, wird der Umschaltvorgang wie folgt eingeleitet:

Das Umschaltsignal über die Signalleitung 24 bewirkt zuerst ein Abfallen des Leistungsrelais 15, so daß der Motor stromlos wird. Danach fällt, nach Zeitverzögerung über das Zeitverzögerungsglied 23, das Relais 19 ab. Die Abfallverzögerung ist so bemessen, daß sich vorher der Kondensator 17 über die Hilfswicklung 13 und Hauptwicklung 12 entladen hat. Somit kann das Relais 19 stromlos geschaltet werden. Danach zieht das Relais 20 an, so daß die Umpolung der Hilfswicklung 13 beendet ist. Auch dies geschieht stromlos. Danach wird, wiederum zeitverzögert, das Leistungsrelais 15 wieder eingeschaltet, und der Motor läuft nun im Rückwärtslauf an und kann damit das Schneidwerk von der Verstopfung befreien. Insbesondere bei der Abschaltung aus dem blockierten Zustand würden die höchsten Ströme mit ungüstigstem cos Phi geschaltet werden, die aber nun nicht mehr auf die Hilfssteuermittel 19, 20 einwirken.

Wenn schließlich das Gerät ausgeschaltet wird, so fällt zuerst wiederum das Leistungsrelais 15 ab und der gesamte Antrieb wird stromlos. Danach fällt verzögert das Relais 20 ab. Auch hier ist wieder die Abfallverzögerung entsprechend der Entladezeit des Kondensators 17 bemessen und das Relais 20 wird wiederum stromlos geschaltet.

Es ist also zu erkennen, daß insbesondere in der Hilfswicklung, wo die Phasenverschiebung mit einem Cosinus Phi von ca. 0,2 früher den unerwünschten Kontaktabbrand der Schaltstücke begünstigt hatte, nun durch das stromlose Schalten eine sehr geringe Kontaktdimensionierung der Relaiskontakte möglich ist.

Die Schaltimpulse der Signalleitung 24 können mannuell und/ oder automatisch erzeugt weden, beispielsweise der Umschaltimpuls in Abhängigkeit von der Stromaufnahme (Blockierzustand) o.dgl..

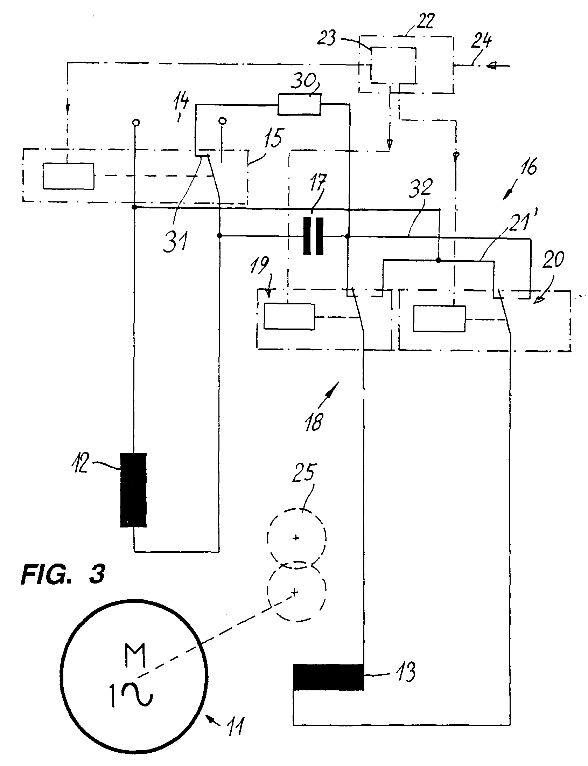

Fig. 2 und 3 zeigen Ausführungen, die mit der nach Fig. 1 identisch sind, weswegen auf die vorherige Beschreibung Bezug genommen wird und die gleichen Bezugszeichen verwendet werden. Gegenüber Fig. 1 besteht folgender Unterschied:

Bei größeren Schaltleistungen für das Hauptschaltmittel 15 kann unter Umständen ein einpoliges Leistungsrelais nicht ausreichen. In diesem Falle wird als Hilfsschaltmittel 15 ein zweipoliges Leistungsschütz eingesetzt, daß seinerseits über ein Zwischenrelais 26 angesteuert und betätigt wird. Die Wirkungsweise ist entsprechend mit dem Unterschied, daß statt einer direkten Ansteuerung des Leistungsrelais 15 das Zwischenrelais 26 vom Steuermittel 22 angesteuert wird.

Bei Fig. 3 ist ein Entladewiderstand 30 vorgesehen, der zwischen einem Kontakt des Hauptrelais 15 und einer Verbindung 32 des Kondensators mit den Hilfsschaltmitteln 19, 20 eingeschaltet ist. Er verkürzt die Entladezeit des Kondensators 17. Auch dies trägt dazu bei, daß es keinen Lichtbogen gibt.

Die Zeitverzögerung kann sehr kurz sein und stört nicht beim Betriebsablauf. Sie ist jedenfalls wesentlich geringer als die normale Anlaufzeit des Motors und fällt so praktisch kaum ins Gewicht. Trotzdem ermöglicht sie das stromlose Schalten. Statt zwei Relais 19, 20 könnte auch ein einziges zweipoliges Relais verwendet werden, obwohl derartige Kleinrelais, wie sie für die Hilfsschaltmittel Verwendung finden können, kostenmäßig kaum ins Gewicht fallen. Es ist noch zu bemerken, daß bei den Ausführungen nach Fig. 1 und 2 das Hauptschaltmittel 15 zwar den Hauptstrom schaltet, jedoch mit einer relativ geringen Phasenverschiebung (Cosinus Phi nahe 1) weil die Kapazität des Kondensators 17 die Induktivität der Hauptwicklung nahezu kompensiert. Insofern liegen günstige Voraussetzungen für die Schaltung unter Last vor.

## Patentansprüche

1. Materialzerkleinerungs- oder -preßanlage mit einem Einphasen-Asynchron-Elektromotor (11) als Antriebsmotor mit einer Hauptschaltmittel (15) zum Einschalten des Motors (11) und Hilfsschaltmittel (19, 20) für Funktionen wie Anlauf, Drehrichtungsumkehr o. dgl. enthaltenden Schaltung, dadurch gekennzeichnet, daß die Hilfs Schaltmittel (19, 20) stromlos schalten und gegenüber den Hauptschaltmitteln (15) zeitverzögert betätigbar sind, daß die Hauptschaltmittel (15) die gesamte Stromversorgung des Motors (11) ein- und ausschalten und die Hilfsschaltmittel (19, 20) eine Hilfswicklung (13) des Motors (11) zur Drehrichtungsumkehr umpolen und daß ein Hilfswicklungs-Schaltungszweig (16), der die Hilfswicklung (13) enthält, eine Kapazität (17) enthält und die Verzögerungszeit ausreicht, um die Kapazität (17) über die Hilfswicklung (13) und Hauptwicklung (12) im wesentlichen zu entladen, bevor das Hilfsschaltmittel (19, 20) betätigt wird.

2. Anlage nach Anspruch 1, dadurch gekennzeichnet, daß Haupt- und Hilfsschaltmittel (15, 19, 20) von einem ein Zeitverzögerungsglied (23) enthaltenden elektronischen Steuermittel (22), gegebenenfalls über ein Zwischenrelais (26), betätigbar sind.

## Claims

1. Material comminuting or pressing machine with a single-phase asynchronous electric motor (11) as the drive motor with a circuit including main switching means (15) for switching on the motor (11) and auxiliary switching means (19, 20) for functions such as starting, rotation direction reversal, etc., characterized in that the auxiliary switching means (19, 20) switch currentless and are operable in time-delayed manner compared with the main switching means (15), that the main switching means (15) switch on and off the entire power supply of the motor (11) and the auxiliary switching means (19, 20) reverse the polarity of an auxiliary winding (13) of the motor (11) for rotation direction reversal and that an auxiliary winding circuit branch (16) containing the auxiliary winding (13) contains a capacitor (17) and the time lag is sufficient in order to substantially discharge the capacitor (17) across the auxiliary winding (13) and the main winding (12) before the auxiliary switching means (19, 20) are operated.

2. Machine according to claim 1, characterized in that the main and auxiliary switching means (15, 19, 20) are operable by an electronic control means (22) containing a time lag element (23), optionally by means of a supplementary relay (26).

## Revendications

1. Installation pour déchiqueter ou comprimer des matériaux, comprenant un moteur asynchrone monophasé (11) comme moteur d'entraînement, un circuit comportant des dispositifs de commutation principaux (15) pour la mise en route du moteur (11), et des dispositifs de commutation auxiliaires (19, 20) assurant des fonctions telles que le démarrage, l'inversion du sens de marche, etc., caractérisée en ce que les dispositifs de commutation auxiliaires (19, 20) entrent en action, sans courant, et peuvent être actionnés avec une certaine temporisation par rapport aux dispositifs de commutation principaux (15), en ce que les dispositifs de commutation principaux (15) autorisent et coupent toute l'alimentation électrique du moteur (11), et les dispositifs de commutation auxiliaires (19, 20) inversent la polarité d'un enroulement auxiliaire (13) du moteur (11), pour provoquer l'inversion du sens de marche, et en ce qu'un branchement de commutation (16) d'enroulement auxiliaire, qui comporte l'enroulement auxiliaire (13), comporte également une capacité (17), et en ce que la temporisation est suffisante pour pratiquement décharger la capacité (17), par l'intermédiaire de l'enroulement auxiliaire (13) et de l'enroulement principal (12), avant que le dispositif de commutation auxiliaire (19, 20) soit actionné.

2. Installation selon la revendication 1, caractérisée en ce que des dispositifs de commutation principaux et auxiliaires (15, 19, 20) sont actionnables par un dispositif de commande électronique (22) comportant un organe temporisateur (23), à l'intervention, éventuellement, d'un relais intermédiaire (26).
